# EUROPÄISCHE PATENTSCHRIFT

(11) **EP 0 433 702 B1**
(45) Veröffentlichungstag und Bekanntmachung des Hinweises auf die Patenterteilung: **12.01.1994**
(21) Anmeldenummer: 90122484.0
(22) Anmeldetag: 26.11.1990
(51) Int. Cl.: G05G 5/05, G05G 1/14

(54) **Hebelwerk**
Lever mechanism
Mécanisme de levier

(30) Priorität: 21.12.1989 DE 3942262
(43) Veröffentlichungstag der Anmeldung: 26.06.1991
(73) Patentinhaber: Volkswagen Aktiengesellschaft, 38436 Wolfsburg (DE)
(72) Erfinder: Tipke, Jörg, Dipl.-Ing., W-3300 Braunschweig (DE)

(56) Entgegenhaltungen:
- DE-A- 2 923 027
- DE-A- 3 841 719
- FR-A- 2 145 886
- US-A- 2 995 043
- US-A- 4 385 754
- US-A- 4 457 497

## Beschreibung

Die Erfindung bezieht sich auf ein Hebelwerk mit um eine Lagerachse relativ zueinander verschwenkbaren Bauteilen und einer Druckfedervorrichtung, insbesondere auf ein Fußhebelwerk eines Kraftfahrzeuges mit Übertotpunktfedervorrichtung, der im Oberbegriff des Patentanspruchs 1 genannten Art, wie sie beispielsweise aus der DE-A-38 41 719 bekannt ist.

Druckfedervorrichtungen werden auf den verschiedensten Gebieten der Technik eingesetzt. U. a. kommen sie im Fußhebelwerk von Kraftfahrzeugen als Übertotpunktfedervorrichtung zum Einsatz, insbesondere bei der Betätigung des Kupplungspedals. Sie reduzieren - nach Überschreiten ihres sogenannten Totpunktes - die erforderlichen Pedalbetätigungskräfte, so daß in vielen Fällen auf eine sonst erforderlich werdende Servounterstützung o. ä. verzichtet werden kann.

Bei den meisten herkömmlichen Übertotpunktfedervorrichtungen sind die mit Endstücken ausgestatteten freien Enden der eine Schraubendruckfeder tragenden Führungs- und Druckstange dabei drehbar auf einer Lagerwelle gelagert, auf der sie - da die Demontierbarkeit der Druckfedervorrichtung aus Servicegründen gegeben sein muß - durch gesicherte Befestigungsmuttern oder ähnliche Elemente gehalten werden, wie dies beispielsweise bei dem aus der französischen Patentanmeldung FR-A- 23 80 160 bekannten Fußhebelwerk für eines der beiden Führungsstangenenden der Fall ist.

Da der Montageaufwand für eine solche Lagerwellen-Lagerung in den meisten Fällen erheblich ist, wurden bereits Hebelwerke mit Übertotpunktfedervorrichtungen (z. B. DE-A-29 23 027, DE-A-38 41 719) entwickelt, bei denen die beiden Enden der die Schraubendruckfeder tragenden teleskopierbaren Führungs- und Druckstange in ihren zugeordneten Widerlagern am Fahrzeugaufbau bzw. am Pedal nicht durch eine Lagerwelle gelagert sind, sondern durch Kugelgelenke (DE-A-29 23 027) oder durch Gelenke mit korrespondierenden konkaven und konvexen Gleitflächen (DE-A-38 41 719). Die beiden Endstücke der Führungs- und Druckstange liegen dabei lose in den Widerlagern und sind mit diesen durch die auf der Führungs- und Druckstange gelagerte Schraubendruckfeder verspannt.

Obgleich der Montageaufwand bei diesen bekannten Hebelwerken im Vergleich zu Hebelwerken mit herkömmlichen lagerwellengelagerten Übertotpunktfedervorrichtungen außerordentlich einfach ist, weil die Führungs- bzw. Druckstange mit ihren beiden Endstücken lediglich in die zugeordneten Widerlager eingeführt werden muß, in denen sie dann unter der Wirkung der auf sie einwirkenden Druckfeder sicher fixiert bleibt, sind auch diese bekannten Hebelwerke noch verbesserungswürdig.

Beim Einbau der bekannten Übertotpunktfedervorrichtungen in das Hebel- bzw. Fußhebelwerk muß nämlich die die Schraubendruckfeder tragende Führungs- und Druckstange jeweils durch eine spezielle Spannzange oder ein ähnliches technisches Hilfsmittel gegen die Wirkung der Schraubendruckfeder axial zusammengedrückt werden und danach mit den beiden Endstücken in den zugeordneten Widerlagern des Hebelwerks in Lagerposition gebracht werden. Ein korrektes in Lagerpositionbringen der axial zusammengedrückten Führungs- und Druckstange stellt wegen des im allgemeinen nur knapp bemessenen, schwierig zugänglichen und schwierig zu überschauenden Einbauraums für das Hebelwerk einen dem Werker Sorgfalt und Konzentration sowie körperliche Wendigkeit abverlangenden Montageschritt dar.

Demzufolge liegt der Erfindung die Aufgabe zugrunde, ein Hebelwerk, insbesondere ein Fußhebelwerk der im Oberbegriff des Patentanspruchs 1 genannten Art konstruktiv derart zu verbessern, daß der Einbau der Druckfedervorrichtung in das Hebelwerk vereinfacht wird.

Diese Aufgabe wird erfindungsgemäß durch die Merkmale des Patentanspruchs 1 gelöst.

Erfindungsgemäß wird also zumindest eine der beiden Widerlager/Endstück-Paarungen der Druckfedervorrichtung mit ihren Gleitflächen benachbarten äußeren schrägen Montageanlaufflächen versehen, mit deren Hilfe es in einfacher Weise möglich wird, die druckfederbeaufschlagte Führungs- und Druckstange ohne Spannzange oder ähnliches technisches Hilfsmittel zwischen die relativ zueinander verschwenkbaren Bauteile des Hebelwerks zu montieren.

Vorteilhafte Weiterbildungen und Ausgestaltungen der Erfindung sind in den Unteransprüchen angegeben.

Anhand eines in der Zeichnung dargestellten Ausführungsbeispieles wird die Erfindung nachstehend näher erläutert.

In der Zeichnung zeigen
- Fig. 1: das Fußhebelwerk eines Kraftfahrzeugs mit eingebauter Übertotpunktfedervorrichtung und
- die Figuren 2 und 3: zwei verschiedene Stadien des Einbauvorgangs der Übertotpunktfedervorrichtung in dieses Fußhebelwerk.

Das Ausführungsbeispiel zeigt die Seitenansicht eines als vormontierte Montageeinheit ausgebildeten Kfz-Fußhebelwerks, wobei der besseren Übersicht wegen lediglich die für das Verständnis der Erfindung notwendigen Bauteile dargestellt und beziffert sind.

Solche Fußhebel-Montageeinheit enthält in den meisten Fällen nicht nur eines sondern mindestens zwei Pedale, üblicherweise ein Kupplungs- und ein Bremspedal; dargestellt ist im Ausführungsbeispiel nur das Kupplungspedal, weil nur dieses erforderlichenfalls mit einer Übertotpunktfedervorrichtung ausgestattet wird.

Der Fußhebel 2, nämlich das Kupplungspedal, des Fußhebelwerks 1 ist um eine ortsfeste Lagerachse 3 des Tragrahmens 18 der Montageeinheit schwenkbar gelagert.

Zwischen dem Tragrahmen 18, d. h. dem bei ins Kraftfahrzeug eingebautem Fußhebelwerk ortsfesten Bauteil, und dem relativ dazu verschwenkbaren Fußhebel 2 ist eine als Übertotpunktfedervorrichtung wirkende Druckfedervorrichtung 5 angeordnet, deren freien Enden in einem fußhebelseitigen Widerlager 10 bzw. in einem tragrahmenseitigen Widerlager 11 angelenkt sind. Die Druckfedervorrichtung besteht in üblicher Weise aus einer teleskopierbaren Führungs- und Druckstange 6 und einer diese umhüllenden Schraubendruckfeder 9, deren Enden sich an Endstücken 7 und 8 der Führungsstange 6 abstützt und diese in einem sie verlängernden Sinne druckfederbeaufschlagt. Die teleskopierbare Führungs- und Druckstange 6 selbst besteht aus einem im wesentlichen hülsenförmigen äußeren Stangenteil 16 und einem im wesentlichen stiftförmigen inneren Stangenteil 17, welches in das äußere Stangenteil 16 eingeschoben ist und mit diesen vorzugsweise unverlierbar - jedoch axial dazu relativ bewegbar - verclipst ist. Vorzugsweise sind beide Stangenteile als Kunststoffteile, z. B. als Spritzgußteile ausgebildet.

Die miteinander zusammenwirkenden Endstücke 7, 8 der Führungs- und Druckstange 6 und die Widerlager 10, 11 weisen jeweils miteinander korrespondierende konkave und konvexe Gleitflächen auf. Im Ausführungsbeispiel ist das tragrahmenseitige Widerlager 11 mit einer konkaven und das tragrahmenseitige Endstück 8 mit einer konvexen Gleitfläche versehen. Demgegenüber weist das pedalseitige Endstück 7 der Druckstange eine konkave Gleitfläche 12 und das zugehörige pedalseitige Widerlager 10 eine konvexe Gleitfläche 13 auf. Die Endstücke 7, 8 liegen lose in den beiden Widerlagern 10, 11 ein und werden durch die Schraubendruckfeder 9 fest in diese hineingepreßt.

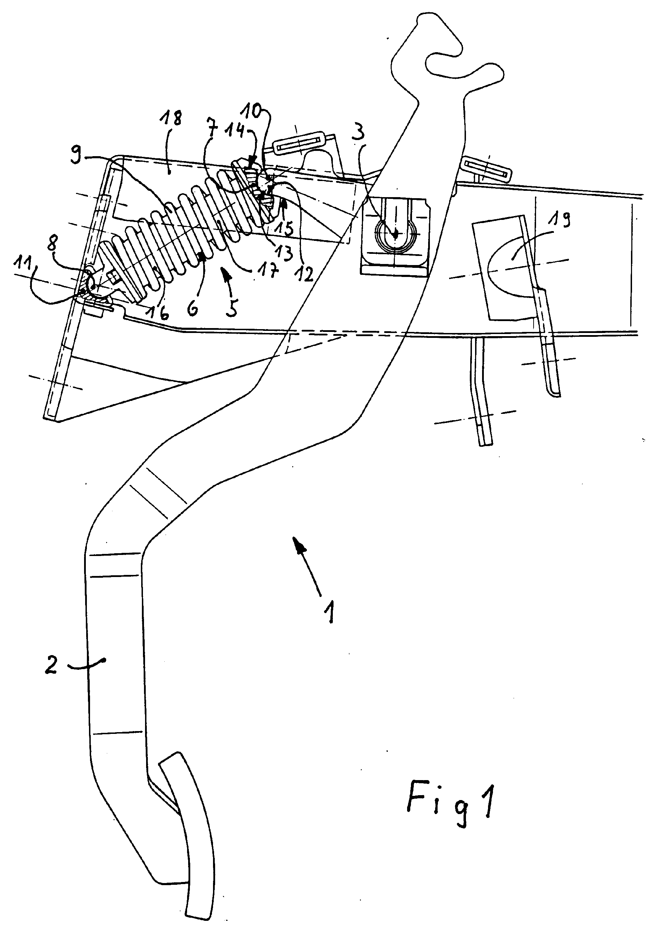

Wie die teilgeschnittene Ansicht der Figuren 1 bis 3 erkennen läßt, ist das pedalseitige Endstück 7 mit einer ihrer Gleitfläche 12 benachbarten äußeren schrägen Montageanlauffläche 14 versehen. Das pedalseitige Widerlager 10 ist mit einer seiner Gleitfläche 13 benachbarten ähnlichen äußeren schrägen Montageanlauffläche 15 versehen.

Die beiden Montageanlaufflächen 14, 15 sind derart ausgebildet und aufeinander abgestimmt, daß die Druckfedervorrichtung 5 ohne Zuhilfenahme technischer Hilfsmittel, d. h. ohne Spannzange o. ä. in das Fußhebelwerk 1 eingebaut werden kann, und zwar sowohl bei der Vormontage der dargestellten Montageeinheit als auch bei später gegebenenfalls notwendig werdenden Wartungs- und/oder Reparaturarbeiten im Fahrzeug selbst.

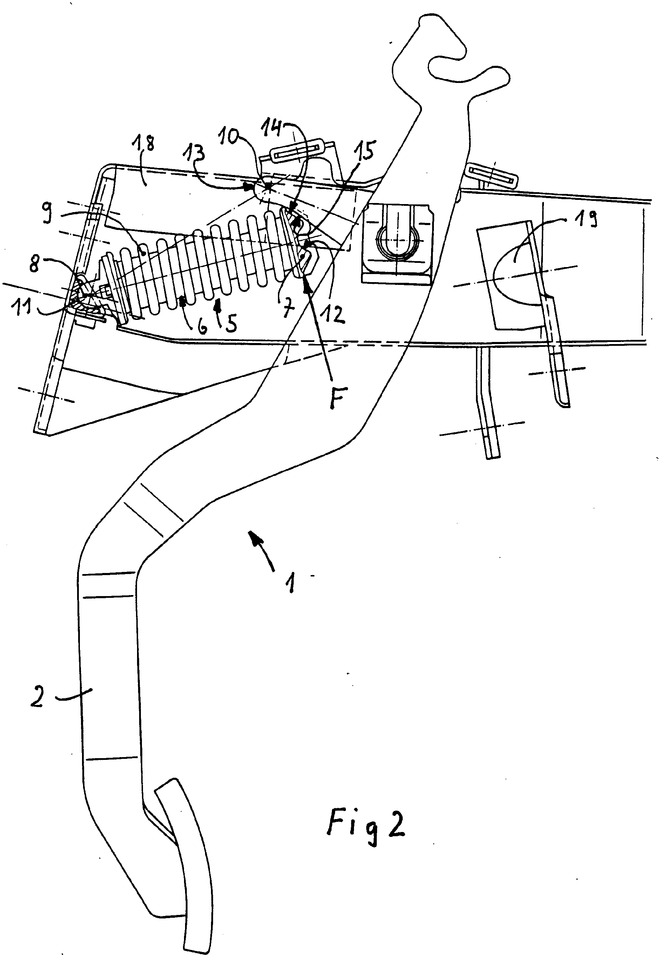

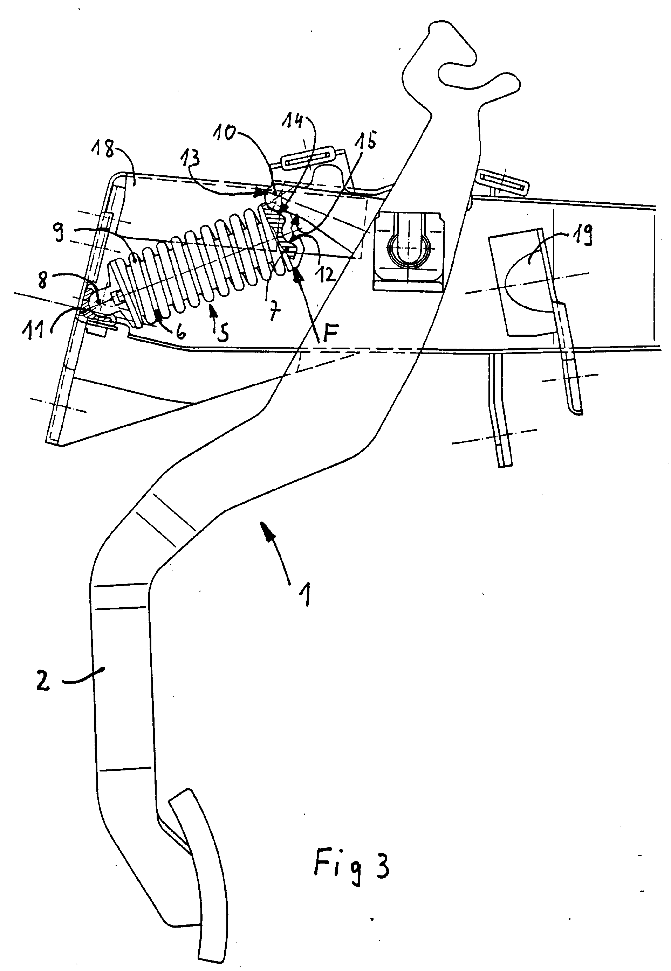

Beim Einbau der Druckfedervorrichtung 5 in das Fußhebelwerk 1 wird die durch die Schraubendruckfeder 9 auf ihre volle axiale Länge ausgefahrene Führungs- und Druckstange 6 mit ihrem einen Endstück, im Ausführungsbeispiel mit ihrem tragrahmenseitigen linken Endstück 8 in das zugehörige Widerlager 11 eingeführt, d. h. mit diesem in Lagerposition gebracht, wie dies in den Figuren 2 und 3 zu erkennen ist. Anschließend wird die Druckstange 6 mit ihrem freien anderen Ende bei voll niedergetretenem Fußhebel 2 so weit zum pedalseitigen Widerlager 10 geführt, bis die äußere schräge Montageanlauffläche 14 des pedalseitigen Endstücks 7 an der ihr zugeordneten äußeren schrägen Montageanlauffläche 15 des pedalseitigen Widerlagers 10 anliegt, wie dies in Fig. 2 dargestellt ist. Nach diesem sehr einfachen Einlegen und Positionieren der Führungs- und Druckstange 6 wird auf die Druckstange eine im wesenlichen quer zu ihrer Längserstreckung wirkende Kraft F in Richtung des pedalseitigen Widerlagers 10 ausgeübt, unter deren Wirkung das pedalseitige Endstück 7 mit seiner schrägen Montageanlauffläche 14 auf der entsprechenden Montageanlauffläche 15 unter axialer Verkürzung der Druckstange 6 am auslegerartigen Arm des Widerlagers 10 in Richtung Gleitfläche 13 entlanggleitet, so lange, bis die konvexe Gleitfläche 13 des Widerlagers 10 schließlich clipsartig in die konkave Gleitfläche 12 des Endstücks 7 "einschnappt", womit der Einbau der Druckfedervorrichtung 5 beendet ist. Dieser Endzustand ist in Fig. 1 dargestellt. Demgegenüber zeigt Fig. 2 die Verhälnisse zu Beginn des Einbaus und Fig. 3 die eines Zwischenzustandes.

Es leuchtet ein, daß das dargestellte Ausführungsbeispiel nicht die einzig mögliche erfindungsgemäße Ausbildung und Einbauweise der Druckfedervorrichtung darstellt. Je nach den vorhandenen Einbauverhältnissen könnte die pedalseitige Endstück/Widerlager-Ausbildung z. B. auch derart gestaltet werden, daß der Einbau der Druckfedervorrichtung nicht bei niedergetretenem, sondern bei in Ruhelage befindlichem Fußhebel, wenn dieser also rechts am Anschlagpuffer 19 anliegt, erfolgt. In diesem Falle würden die miteinander zusammenwirkenden schrägen Montageanlaufflächen natürlich jeweils auf der anderen Seite der miteinander korrespondierenden Gleitflächen 12 und 13 anzuordnen sein und das freie Ende der Führungs- und Druckstange 6 würde nicht von unten nach oben, sondern von oben nach unten zum Widerlager 10 hin zu drücken sein.

Grundsätzlich ist es natürlich auch denkbar, die Anordnung derart auszubilden, daß beim Einbau der Übertotpunktfedervorrichtung zunächst das pedalseitige Endstück der Führungs- und Druckstange mit dem zugeordneten pedalseitigen Widerlager in Lagerposition gebracht wird und anschließend das tragrahmen- bzw. aufbauseitige Endstück mit Hilfe entsprechend angeordneter und ausgebildeter schräger Montageanlaufflächen in das zugehörige Widerlager eingeschoben wird.

## Patentansprüche

1. Hebelwerk mit um eine Lagerachse (3) relativ zueinander verschwenkbaren Bauteilen (2, 18) und einer Druckfedervorrichtung (5), insbesondere Fußhebelwerk (1) eines Kraftfahrzeugs mit Übertotpunktfedervorrichtung, wobei die Druckfedervorrichtung eine teleskopierbare Führungs- und Druckstange (6) aufweist, welche durch eine sie umschließende und sich an den beiden Endstücken (7, 8) der Druckstange (6) abstützende Schraubendruckfeder (9) im sie verlängernden Sinne druckfederbeaufschlagt ist und sich mit den Endstücken (7, 8) lose in Widerlagern (10, 11) der relativ zueinander verschwenkbaren Bauteile (2, 18) abstützt, und wobei die miteinander zusammenwirkenden Widerlager (10, 11) und Endstücke (7, 8) jeweils miteinander korrespondierende konkave und konvexe Gleitflächen (12, 13) aufweisen,
**dadurch gekennzeichnet,**
daß zumindest eine der beiden Widerlager/Endstück-Paarungen (10, 7) mit Montageanlaufflächen (14, 15) versehen ist, welche den zugeordneten Gleitflächen (12, 13) benachbart und derart schräg gestaltet sind, daß die Druckfedervorrichtung (5) bei ihrem Einbau dann,
wenn sich einerseits die Bauteile (2, 18) in einer ihrer Endstellungen, vorzugsweise in der eingerückten Endstellung, befinden
und wenn andererseits eines der beiden Endstücke (8) mit dem zugehörigen Widerlager (11) in Lagerstellung und das andere der beiden Endstücke (7) mit seiner Montageanlauffläche (14) an der Montageanlauffläche (15) des zugehörigen Widerlagers (10) zur Anlage gebracht ist,
mit ihrem mit der Montageanlauffläche (14) versehenen anderen Endstück (7) allein durch eine im wesentlichen quer zu ihrer Längserstreckung von außen auf sie ausgeübte Kraft (F) mit dem zugehörigen Widerlager (10) unter vorübergehender Verkürzung in die Lagerposition drückbar ist.

2. Hebelwerk nach Anspruch 1,
**dadurch gekennzeichnet,**
daß die teleskopierbare Führungs- und Druckstange (6) aus einem im wesentlichen hülsenförmigen äußeren Stangenteil (16) und einem in diese eingeschobenen, im wesentlichen stiftförmigen inneren Stangenteil (17) besteht, und daß das äußere und das innere Stangenteil (16, 17) miteinander unverlierbar - jedoch axial relativ zueinander bewegbar - verclipst sind.

3. Hebelwerk nach Anspruch 2,
**dadurch gekennzeichnet,**
daß die beiden Stangenteile (16, 17) als Kunststoffteile ausgebildet sind.

## Claims

1. A lever mechanism having components (2, 18), which are pivotable relative to each other about a bearing axis (3), and a compression spring device (5), in particular a foot lever mechanism (1) of a motor vehicle having a top dead centre spring device, wherein the compression spring device comprises a telescopic guiding and pressing rod (6), which is influenced in a spring-action manner, in the sense that the guiding and pressing rod (6) is extended in length, by a compression spring (9) which envelops the guiding and pressing rod (6) and the compression spring (9) is supported on both end pieces (7, 8) of the pressing rod (6) and the guiding and pressing rod (6) is supported with the end pieces (7, 8) loosely in the counter bearings (10, 11) of the components (2, 18) which pivot relative to each other and wherein the counter bearings (10, 11), which cooperate with each other, and the end pieces (7, 8) comprise sliding surfaces (12, 13) which correspond with each other in a concave and convex manner respectively, characterised in that at least one of the two pairs of counter bearings (10)/end pieces (7) is provided with assembly run-up surfaces (14, 15) which are adjacent to and arranged diagonally to the associated sliding surfaces (12, 13) in such a manner that during its installation the compression spring device (5) can be pressed into the bearing position with its other end piece (7) provided with the assembly run-up surface (14) merely by virtue of a force F exerted from the outside on the compression spring device (5) substantially transverse to its longitudinal extension, when on the one hand the components (2, 18) are located in their end positions, preferably in the engaged end position and when on the other hand one of the two end pieces (8) with the associated counter bearing (11) is brought into the bearing position and the other of the two end pieces (7) with its assembly run-up surface (14) is brought into position against the assembly run-up surface (15) of the associated counter bearing (10).

2. A lever mechanism according to claim 1, characterised in that the telescopic guiding and pressing rod (6) comprises an outer rod part (16) substantially in the form of a sleeve and an inner rod part (17) which is substantially in the form of a pin and is inserted into the outer rod part (16) and that the outer and the inner rod part (16, 17) are clipped together in a manner so as not to become separated but are axially moveable relative to each other.

3. A lever mechanism according to claim 2, characterised in that the two rod parts (16, 17) are formed as synthetic material parts.

## Revendications

1. Mécanisme à levier comprenant des composants (2, 18) pouvant osciller l'un par rapport à l'autre autour d'un axe (3) de palier, et un dispositif (5) à ressort de pression, notamment un pédalier (1) d'un véhicule automobile comprenant un dispositif de ressort à dépassement du point mort, le dispositif à ressort de pression comprenant une tringle télescopique (6) de guidage et de pression, qui est mise sous contrainte dans le sens d'un allongement par un ressort hélicoïdal (9) de pression entourant la tige et s'appuyant sur les deux embouts (7, 8) de celle-ci, et qui s'appuie librement, par l'intermédiaire des embouts (7, 8), sur des butées (10, 11) des composants (2, 18) oscillants l'un par rapport à l'autre, les butées (10, 11) et les embouts conjugués (7, 8) présentant respectivement des faces de glissement conjuguées concaves et convexes (12, 13),
caractérisé en ce que l'un au moins des deux couples butée/embout (10, 7) est pourvu de faces d'entrée de montage (14, 15) qui sont configurées de façon adjacente aux faces de glissement associées (12, 13) et sont inclinées de façon telle que, lors de l'installation du dispositif (5) à ressort de pression,
lorsque d'une part les composants (2, 18) se trouvent dans l'une de leurs positions de fin de course, de préférence dans la position de fin de course repoussée,
et lorsque d'autre part l'un des deux embouts (8) se trouve en position d'appui sur la butée correspondante (11), et l'autre embout (7) se trouve en contact, au niveau de sa face (14) d'entrée de montage, avec la face (15) d'entrée de montage de la butée correspondante (10),
le dispositif (5) à ressort de pression puisse être poussé, au niveau de son autre embout (7) portant la face (14) d'entrée de montage, dans la position d'appui sur la butée correspondante (10), rien que par une force (F) exercée de l'extérieur sur le dispositif, dirigée essentiellement transversalement au sens longitudinal de celui-ci, comprimant temporairement la longueur de ce dispositif.

2. Mécanisme à levier selon la revendication 1, caractérisé en ce que la tringle télescopique (6) de guidage et de pression est composée essentiellement d'une partie extérieure (16) de tringle en forme de douille et d'une partie intérieure (17) de tringle présentant essentiellement la forme d'une broche, emboîtée dans la première,
et en ce que les parties extérieure et intérieure (16, 17) de la tringle sont assemblées l'une avec l'autre au moyen de clips, de façon imperdable, mais axialement mobiles l'une par rapport à l'autre.

3. Mécanisme à levier selon la revendication 2, caractérisé en ce que les deux parties (16, 17) de la tringle sont réalisées sous forme de pièces en matière plastique.
